(19) Europäisches Patentamt
European Patent Office
Office européen des brevets

(11) EP 1 933 180 B1

(12) # FASCICULE DE BREVET EUROPEEN

(45) Date de publication et mention de la délivrance du brevet:
**22.07.2009 Bulletin 2009/30**

(51) Int Cl.:
***G02B 5/23*** *(2006.01)* *D03D 9/00* *(2006.01)*
*E06B 9/24* *(2006.01)*

(21) Numéro de dépôt: **07122945.4**

(22) Date de dépôt: **11.12.2007**

(54) **Réseau, destiné à la constitution d'un écran atténuateur de lumière, assurant une auto-régulation de la lumière transmise**

Netz, vorgesehen für Lichtschattierungsblenden, mit eine selbstregulierende lichtdurchlässigkeit

Web, for use as a light shading screen, which allows for self regulation of transmitted light

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.12.2006 FR 0655447**

(43) Date de publication de la demande:
**18.06.2008 Bulletin 2008/25**

(73) Titulaire: **XLscreen**
**69150 Décines Charpieu (FR)**

(72) Inventeur: **Crouzet, Alain**
**38660, LE TOUVET (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A1- 0 949 401**
**WO-A1-99/43879**
**FR-A- 2 873 134**
**JP-A- 7 059 646**
**JP-A- 2002 020 972**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 933 180 B1

## Description

La présente invention est relative au domaine des réseaux de fils croisés pour posséder un facteur d'ouverture déterminé et destinés à constituer des rideaux ou stores pouvant être utilisés en disposition interne par rapport à une fenêtre, porte vitrée, ou baie vitrée. De tels rideaux ou stores ont généralement pour fonction d'atténuer le passage de la lumière dans le cas de fortes luminosités et de constituer une sorte d'écran.

Des réseaux du type ci-dessus sont généralement enduits de matière thermo-plastique, soit par enduction préalable des fils, soit par enduction par trempage, une telle enduction étant destinée à conférer une résistance convenable au vieillissement, plus particulièrement dans le cas de mise en place externe. L'enduction doit aussi être généralement considérée comme ayant une vocation spécifique de liage permettant d'établir par thermosoudage une liaison entre les fils entrelacés qui sont tissés selon une armure qui peut être quelconque dans la mesure où elle laisse subsister un facteur d'ouverture non négligeable, du type de celui des articles vendus en tant qu'écran d'atténuation du passage de la lumière.

L'art antérieur propose de réaliser de tels réseaux, par exemple à partir de deux nappes de fils entrelacés, formant une toile ou tissu. Les solutions de l'art antérieur sont le plus souvent réalisées à partir de fils de verre enduits avec une composition polymérique puis tissés, ou bien encore à partir de fils de verre tissés puis enduits avec une composition polymérique, par exemple par foulardage. La composition comprend le plus souvent un ou plusieurs polymères choisis parmi le PVC, les liants vinyliques et les liants polyuréthanes. Ces réseaux peuvent être vendus sous la forme de lamelles et sont parfaitement adaptés pour la réalisation de rideaux à lamelles s'étendant verticalement ou encore sous la forme de rideaux ou stores enroulables (encore appelés « rollers»). Le document JP-07-059646 propose également d'enduire une toile d'un pigment photochronique pour former un film régulateur de lumière.

Des variations de la lumière, en fonction du temps et de l'heure de la journée interviennent, ce qui oblige l'utilisateur à modifier manuellement le positionnement du store ou rideau pour laisser passer, plus ou moins, en fonction de ses besoins, la lumière.

Un des objectifs de la présente invention est de fournir un réseau destiné à la constitution d'un écran d'atténuateur de lumière dont l'utilisation soit facilitée, tout en fournissant un réseau qui puisse être obtenu de façon aisée et à un coût de revient raisonnable.

Dans ce contexte, les inventeurs proposent de fournir un réseau fibreux traité avec une composition adaptée, les composants de la composition étant sélectionnés de façon à obtenir une auto-régulation de la couleur de la composition et donc du réseau, en fonction de la quantité de lumière reçue, et par conséquent une régulation de la lumière transmise.

Aussi, l'invention a pour objet un réseau, destiné à la constitution d'un écran atténuateur de lumière, constitué d'au moins deux nappes de fils croisés et associées pour former une grille ajourée de facteur d'ouverture déterminé caractérisé en ce que les nappes sont enduites avec une composition comprenant un liant polymérique et un pigment organique photochromique.

La présente invention a également pour objet les stores ou rideaux constitués d'un réseau tel que précédemment décrit.

Selon un autre de ses aspects, l'invention concerne un procédé de fabrication d'un réseau conforme à l'invention qui comprend une étape de traitement des fils des nappes, constituant la grille ajourée de facteur d'ouverture déterminé, avec une composition comprenant un liant polymérique et un pigment organique photochromique.

La description qui va suivre en référence aux FIGURES annexées permet de mieux comprendre l'invention.

La **FIGURE 1** met en évidence le changement d'aspect observé avec un réseau conforme à l'invention lorsque ce dernier est exposé à la lumière.

Les **FIGURES 2** et **3** montrent les résultats obtenus avec le test décrit dans les exemples par différents réseaux conformes à l'invention.

La **FIGURE 4** montre l'évolution de l'intensité lumineuse en fonction du temps et des phases de transition éclaircissement et noircissement dans le cas de l'essai 3, présenté dans les exemples.

La **FIGURE 5** montre l'évolution de la transmission visible au cours du temps, obtenue par les différents essais, présentés dans les exemples.

Pour la constitution de réseaux adaptés aux applications de type store ou rideau, des fils de verre, de polyester ou de polyamide, peuvent être utilisés. De tels fils peuvent être, avant traitement avec la composition à base de pigment photochromique utilisée dans le cadre de l'invention, soit sec, soit préalablement enduit par exemple avec du PVC. Le réseau de fils peut être réalisé par tissage de deux nappes de fils entrelacés. Un tel réseau peut correspondre à tout type de toile ou tissu notamment. Il peut également être prévu que cette grille soit constituée de deux nappes de fils superposées sans entrelacement, la liaison entre les deux nappes pouvant être réalisée par tout moyen approprié. De préférence, les fils sont parallèles entre eux dans chacune des nappes et sont écartés d'un pas d'espacement constant ou variable, comme décrit, par exemple, dans WO 99/43879. Les fils se croisent, avec ou sans entrelacement, de façon à former des mailles ouvertes de facteur d'ouverture déterminé. Le plus souvent, l'orientation des fils dans chacune des

nappes est telle que les fils se croisent selon un angle de 90°. Les méthodes de confection de telles grilles sont bien connues de l'homme du métier. Le facteur d'ouverture, également nommé taux d'ouverture (OF) correspond au rapport de la surface des trous ou mailles sur la surface totale du réseau. Ce facteur d'ouverture est fonction de l'application visée et est de préférence compris entre 2 et 20% et de préférence de l'ordre de 5% ou 3%. Les réseaux dits techniques présentent généralement un facteur d'ouverture plus faible et laissent également passer moins de lumière (à taux d'ouverture constant) que les réseaux dits décoratifs. Dans les applications de type stores, de tels réseaux ajourés peuvent être associés sur l'un de leur côté à un mandrin d'enroulement.

Dans le cadre de l'invention, les nappes constitutives du réseau sont enduites avec une composition polymérique photochromique. Le terme enduit est à interpréter au sens large, c'est-à-dire que la composition peut être appliquée sur les nappes par tout moyen. Le terme « enduit » est utilisé dans la présente invention, pour désigner un fil qui présente un revêtement en surface. Le terme « enduit » n'exclut néanmoins pas le fait que le revêtement puisse également imprégner le fil, c'est à dire que le revêtement, dans ce cas, se trouve à la fois en surface du fil et pénètre sur au moins une partie de son épaisseur. Le traitement avec la composition peut être effectué avant ou après la constitution du réseau. Le réseau peut être imprégné de la solution polymérique et est, par exemple, obtenu par les techniques d'imprégnation bien connues de l'homme de l'art, par exemple par foulardage. Dans ce type de techniques où le réseau est trempé dans un bain de la composition polymérique photochromique, la composition recouvre le fil sur toute sa surface développée. Il est également possible de déposer le réseau constitué sur une fine couche de composition polymérique sous la forme d'un liquide visqueux, une telle couche pouvant être réalisée avec un filmographe. Il est également envisageable de ne traiter les nappes de fils que sur une seule face, en utilisant les techniques d'enduction, par exemple au moyen d'une racle.

De préférence, on utilisera un liant polymérique miscible avec l'eau. Dans ce cas, la composition liquide appliquée sur les nappes de fils contient en général un pourcentage important d'eau : par exemple de 30 à 60% (m/m).

Après traitement, le réseau subit le plus souvent une étape de séchage, destinée à éliminer les solvants, et notamment l'eau de la composition. Cette étape de séchage est par exemple réalisée à une température comprise dans la gamme allant de 150 et 170°C.

De préférence, la composition représente de 3 à 20 % (m/m), de préférence de 5 à 15 % (m/m) du réseau (correspondant à la somme nappes de fibres + résine). Ce pourcentage, comme tous les pourcentages donnés dans la description, à moins qu'il n'en soit spécifié autrement, est un pourcentage massique mesuré sur le réseau fini, c'est-à-dire qu'à moins qu'il n'en soit spécifié autrement, la composition est la composition polymérique présente sur le réseau revendiqué et non la composition liquide utilisée pour la réalisation du réseau.

Selon une caractéristique essentielle de l'invention, la composition contient un pigment organique photochromique. C'est-à-dire que le pigment présente une couleur qui varie en fonction de la lumière. Le plus souvent, un tel pigment passe d'un aspect incolore à un aspect coloré, sous l'action de la lumière et ceci de façon réversible. Une réponse photochromique est, par exemple, induite par un isomère incolore d'un composé organique contenant une liaison carbone oxygène qui se dissocie sous l'action des UV (300 à 360 nm). L'isomère incolore contient deux systèmes localisés qui absorbent seulement dans la partie UV du spectre. Le composé apparaît donc incolore. Quand la liaison carbone-oxygène s'ouvre, les deux systèmes se transforment en un seul système délocalisé qui absorbe dans le spectre visible, provoquant la coloration. Le système photochromique est excité par les UV. De préférence, le pigment organique photochromique est choisi parmi :

- les spiropyranes,
- les spirooxazines qui présentent un remarquable comportement à la fatigue (la perte de performance du photochrome au cours du temps en raison de sa dégradation chimique, due le plus souvent à l'oxydation), par exemple les naphtooxazines,
- les chromènes, par exemple les naphtopyranes et benzopyranes,
- les fulgides et fulgimides dont les espèces colorées présentent une bonne stabilité vis à vis de la réversion thermique,
- les diaryléthènes qui présentent des propriétés proches des fulgides,
- les quinones,
- les viologenes,
- les perimidinespirocyclohexadieniones,

et leurs dérivés.

Le **TABLEAU 1** illustre des exemples de composés pour les familles préférées :

**TABLEAU 1**

| Famille | Exemple de formules |
|---|---|
| Spiropyranes | 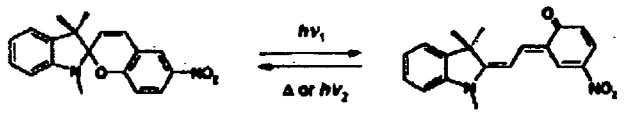<br>Forme fermée (Indolinospiropyrane) — Forme Ouverte (Merocyanine) (Forme Quinonique) |
| Spirooxazines (naphtooxazines) | 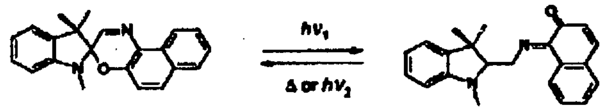<br>Forme fermée — Forme Ouverte (Merocyanine) (Forme Quinonique) |
| Benzo et naphtopyrabe (Chromene) | 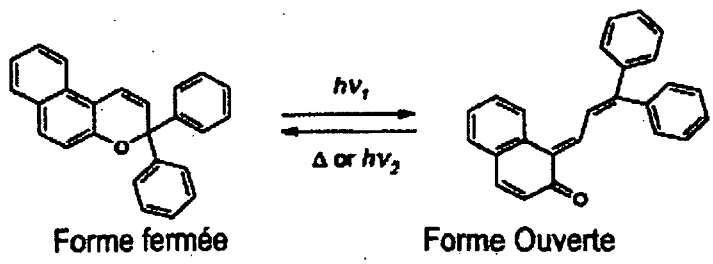<br>Forme fermée — Forme Ouverte |
| Fulgides et fulgimides | 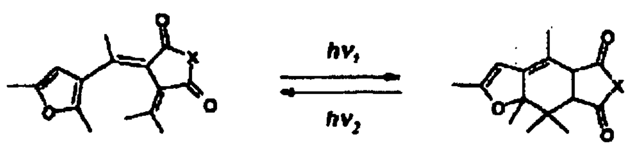<br>X = O (fulgides)<br>X = NR (fulgimides)<br>Forme Ouverte — Forme fermée |
| Diaryléthènes | 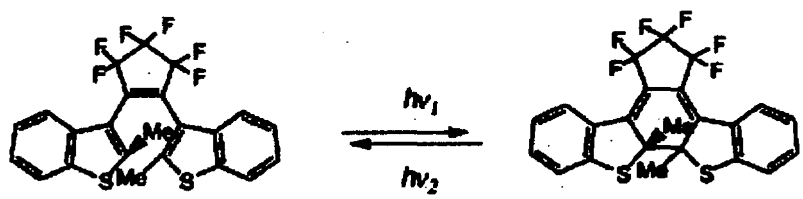<br>Forme Ouverte — Forme fermée |

En particulier, la modification de couleur de la composition, entrainant une modification de la lumière transmise, se traduit par un assombrissement ou éclaircissement de la composition, comme illustré **FIGURE 1.** La **FIGURE 1** montre la variation de couleur d'un réseau conforme à l'invention entre deux zones, l'une exposée à la lumière et une autre non exposée. De façon préférée, en l'absence de lumière, la composition non activée présentera une couleur blanche et la composition activée soumise à une lumière intense présentera une couleur noir ou gris foncé. La présence de ce pigment organique permet une auto-régulation de la lumière transmise par le réseau, en fonction de la quantité de lumière qui arrive sur le réseau. En tant qu'exemple de pigments organiques photochromiques commerciaux, on peut citer les piments Photosol®, Variacrol® ou Reversacol® et plus précisément :

- les spirooxazines commercialisés par PPG, sous le nom de Photosol bleu 0265, ou Photosol jaune 5-3
- le spirooxazine commercialisé par Clariant sous le nom de Variacrol Blue A

- les pigments commercialisés par James Robinson, tels que :

  les naphropyranes : Midnight grey, reversacol ruby, reversacol sunflower, reversacol misty grey, reversacol 306, reversacol 219, et reversacol 208 les naphtooxazines : Reversacol paltinate purple, reversacol plum red, reversacol velvet blue.

La présence du pigment au sein de la composition permet au réseau d'assurer une auto-régulation de la lumière transmise. La durée de vie du pigment photochromique va dépendre, notamment, de sa quantité dans la composition, des stabilisants utilisés et de la composition du liant polymérique. En particulier, l'utilisation d'absorbeurs d'UV, nommés également stabilisant anti-UV, allongera la durée de vie du photochrome mais réduira l'intensité de couleur.

Aussi, de façon avantageuse, le pigment organique photochromique représente de 0,05 à 0,4 %(m/m), de préférence de 0,09 à 0,3% (m/m) de la masse totale du réseau.

Le liant polymérique est, quant à lui, choisi parmi les polymères thermoplastiques, les polymères thermodurcissables, et leur mélange. De préférence, le liant polymérique est choisi parmi les liants vinyliques, acryliques ou polyuréthanes, les polyuréthanes étant particulièrement adaptés, du fait de leurs propriétés de résistance à la lumière. On peut, par exemple, utiliser en tant que liant acrylique, l'Helizarin FWT (BTC), ou les plastisols acryliques comme Degalan BM 310 (DEGUSSA), les polyuréthanes tels que Impranil DLN (BAYER), Rhenapret FWP (THOR), Incorez W830/092, Incorez W830/397, Incorez W830/404/1 commercialisés par INDUSTRIAL COPOLYMER, ou encore Edolan LV, Edolan GS, Edolan HT commercialisés par LANXESS, polythan PU 560, polythan PU 605 commercialisés par POLYCOATING, les liants vinyliques comme l'acétate de polyvinyl, Rhenapret VEA, et également Carboset XPD 2856, Carboset XPD 2852 commercialisés par NOVEON ou des plastifiants tels que Santicizer commercialisé par DEGUSSA.

A titre d'exemple, le liant polymérique représente de 2 à 19% (m/m), de préférence de 4 à 14%(m/m) de la masse totale du réseau.

Selon un mode de réalisation préféré de l'invention, le liant polymérique utilisé présentera une certaine souplesse, par exemple caractérisée par un allongement à la rupture mesuré selon la norme DIN 53504 supérieur ou égal à 600%. Les inventeurs ont mis en évidence qu'en utilisant un tel liant polymérique, la mobilité du pigment photochromique au sein de la composition est améliorée, ce qui lui permet de changer d'état le plus souvent possible.

De façon avantageuse, la composition comprend également un stabilisant anti-UV. En tant que stabilisant anti-UV, on peut citer les Hals (de l'anglais « Hindered Amine light Stabilizer ») tels que l'Uvasil 299 (Great Lakes), le Tinuvin 765 ou le Tinuvin 144 (Ciba), le Sanduvor 3050 (Clariant), ou encore les absorbeurs UV comme le Tinuvin 327 (Ciba), le Sanduvor 3206 ou le Sanduvor VSU (Clariant) ou bien les désactivateurs commercialisés par DABCO. De préférence, le stabilisant anti-UV est présent dans la composition, de façon à représenter de 0,05 à 0,4% (m/m), de préférence de 0,09 à 0,3% (m/m) de la masse totale du réseau.

La composition peut également inclure un agent anti-oxydant. L'Irganox 1076 (Ciba) est un exemple d'agent anti-oxydant pouvant être utilisé dans la composition selon l'invention. De préférence, l'agent anti-oxydant est présent dans la composition, de façon à représenter de 0,1 à 2% (m/m), de préférence de 0,2 à 1 % (m/m) de la masse totale du réseau.

Les exemples ci-après permettent de mieux comprendre l'invention. Dans les exemples qui suivent la quantité des différents constituants de la composition sont exprimées en pourcentage massique de la composition liquide utilisée également nommée formulation.

Les performances des réseaux selon l'invention ont été évaluées en utilisant la méthode suivante (nommé **test** ou **surtest** dans la suite) :

La TV (transmission visible) est la proportion de lumière visible (400 à 800nm) transmise à travers le réseau. Pour mesurer cette caractéristique, on utilise un luxmetre (Testo 545, commercialisé par LABO and Co), avec lequel on mesure la quantité de lumière en lux.

L'intensité I est déterminée en passant le luxmètre sur un réseau imprégné de pigment photochrome non protégé par un filtre UV - visible

Ensuite, à t0 puis toutes les heures, on réalise trois mesures en intercalant entre la cellule et la lampe :

1-Lumière + filtre + tissu imprégné + luxmètre
2-Lumière + tissu imprégné + filtre + luxmètre
3-Lumière + filtre + tissu imprégné + luxmètre

La mesure d'intensité n°2 correspond à un noircissement (noté Ni) et la mesure d'intensité n°3 à un blanchiment (noté Bi).

Pour chaque mesure (toutes les heures) les valeurs suivantes sont calculées :

$$Dni = (B_{i-1} - Ni)/B_{i-1}$$

$$Bni = (Bi - Ni)/Ni$$

$$\Longrightarrow \quad D = Dni/Dn0 \qquad \text{et} \qquad B = Bni/Bn0$$

avec Bi qui correspond au blanchiment et Ni au noircissement, La TV = 1 - Dni) au temps i, intensités mesurées respectivement lors de la mesure n°2 et de la mesure n°3.

L'évaluation des pigments a été réalisée au suntest CPS (apréciation visuelle) avec comme conditions : E= 765 W/$m^2$ et une Lampe Xenon NXE 1500B. Ces différents pigments ont été testés :

- Photosol bleu 0265, ou Photosol jaune 5-3 commercialisés par PPG
- Variacrol Blue A commercialisé par Clariant
- Midnight grey, Reversacol ruby, Reversacol sunflower, Reversacol misty grey, Reversacol 306, Reversacol 219, Reversacol 208, Reversacol paltinate purple, Reversacol plum red, Reversacol velvet blue, commercialisés par James Robinson.

Deux types de liants polymériques ont été utilisés pour tester la non-dégradation sous l'action de la lumière de ces pigments photochromiques :

- Rhenapret VEA , Impranil DLN et helizarin FWT, liants polymériques en phase aqueuse
- Plastisol

Les formulations présentées dans le **TABLEAU 2** (qui présentent les pourcentages massiques des différents éléments de la formulation liquide utilisée) ont été employées.

**TABLEAU 2**

| Matières premières | Liant en phase aqueuse % massique | Plastisol % massique |
|---|---|---|
| Pigment | 0,5 | 0,5 |
| Liant polymérique (phase aqueuse) | 99,5 | |
| Plastisol | | 99,5 |
| TOTAL | 100 | 100 |

Les formulations à base de plastisol sont appliquées sur un tissu blanc en fibre de verre enduits de PVC (reference screen 525 blanc - HEXCEL).

Les formulations aqueuses sont appliquées sur un tissu de verre 7628 Tr112 (HEXCEL).

Un film de 30μm humide formé avec la formulation, est déposé, à l'aide d'un filmographe, sur une plaque de verre puis le tissu traité est déposé sur ce film humide. Après un séchage de 3 minutes à 160°C, le taux de traitement moyen est de 9% (m/m).

A la suite de cette évaluation, les pigments retenus pour évaluer les stabilisants UV et les antioxydants sont le Velvet blue et le midnight grey, qui présentent la meilleure stabilité dans le temps.

Cette évaluation a également été effectuée au suntest avec une appréciation visuelle. Les formulations présentées dans le **TABLEAU 3** (qui présentent les pourcentages massiques des différents éléments de la formulation liquide utilisée) ont été employées.

**TABLEAU 3**

| Matières premières | Liant en phase aqueuse % massique | Plastisol % massique |
|---|---|---|
| Velvet Blue | 0,5 | 0,5 |
| Hals | 0,5 – 1 | 0,5 – 1 |
| Stabilisant anti-UV | 0,5 – 1 | 0,5 – 1 |
| Désactiveur | 1 | 1 |
| Antioxydant | 0,5 - 1 | 0,5 - 1 |
| Ethanol | 20 – 25 | |
| Eau | 10 - 15 | |
| Helizarin FWT | 60 – 70 | |
| Plastisol | | 95,5 - 97 |
| TOTAL | 100 | 100 |

Quelle que soit la matrice utilisée, une légère augmentation de la tenue au suntest est constatée.

Différents liants ont également été testés, afin d'augmenter la durée de vie du photochrome. Celle-ci est fonction de la souplesse du polymère. Différents polyuréthanes tres souples, dont les caractéristiques sont mentionnées **TABLEAU 4,** ont été utilisés.

**TABLEAU 4**

| FOURNISSEUR | PRODUITS | TG1˚C | TG2 ˚C | TG3 ˚C | TG4 ˚C | allongement maxi | module 100% (mPa) |
|---|---|---|---|---|---|---|---|
| BAYER | IMPRANIL DLN | -51 | -4,4 | 62,6 | | 700% | 2 |
| THOR | RHENAPRET FWP | -48,8 | 79,6 | | | Pas de valeur | Pas de valeur |
| INDUSTRIALCOPOLYMERS | W830/397 | -31,7 | 61,8 | | | 700% | 2 |
| ■ | W830/404/1 | -27,4 | 95.4 | | | 700% | 1,5 |
| LANXESS | EDOLAN LV | -45 | 18.9 | 46,5 | | 500% | 2,5 |
| ■ | EDOLAN GS | -3,8 | 52,7 | | | 650% | 1,3 |
| ■ | EDOLAN HT | -38,1 | 46,5 | | | 400% | 4 |
| ■ | EDOLAN LS | -15,9 | 73,3 | | | 720 | 0,7 |
| POLYCOATING | POLYTHAN PU 580 | -43,8 | 18,8 | | | 800% | 2 |
| ■ | POLYTHAN PU 605 | -51,8 | -3,1 | 52,9 | 79 | | |

Les formulations présentées dans le **TABLEAU 5** (qui présentent les pourcentages massiques des différents éléments de la formulation liquide utilisée) ont été employées.

**TABLEAU 5**

| Matières premières | Liant en phase aqueuse % massique |
|---|---|
| Reversacol midnight grey | 0,2 |
| Hals (Tinuvin 765) | 0,5 |
| Irganox 1076 | 1 |
| Texipol 5028 | 0,5 |
| Eau | 47,8 |
| Liant polymérique | 50 |
| TOTAL | 100 |

Le Texipol 5028 est un épaississant acrylique qui permet de rendre l'application plus homogène.

L'application de la formulation est effectuée à l'aide d'un filmographe (30μm humide). Deux essais sont effectués pour chaque liant. Le support qui est traité est le screen nature blanc (OF 5%), commercialisé par HEXCEL REINFORCEMENTS, qui est pris comme référence.

Tous les échantillons sont soumis au test décrit précédemment.

Le plastisol qui donne de bonne performance en terme de tenue au suntest en apréciation visuelle, est utilisé comme référence.

Les résultats présentés **FIGURE 2** montrent une différence notable entre les liants polyuréthanes. La meilleure durée de vie est obtenue avec deux liants : Incorez W830/404/1 et EDOLAN GS.

D'autres essais sont réalisés, afin d'optimiser la durée de vie du pigment, en jouant sur 4 paramètres :

**(A)** - Concentration pigment
Midnight grey de James Robinson de 0,2 à 0,5 % (m/m) de la composition
**(B)** - Vitre avec filtre UV [avec - sans]
**(C)** - Concentration antioxydant de 1 à 5 % (m/m) de la composition
**(D)** - quantité de composition déposée au filmographe sous la forme d'un film humide de 10 à 30 μm d'épaisseur

Le **TABLEAU 6** présente les pourcentages massiques des différents éléments (A) à (D) de la formulation liquide utilisée.

**TABLEAU 6**

| **Essais** | **(A)** | **(B)** | **(C)** | **(D)** |
|---|---|---|---|---|
| **3** | 0,5 | Avec | 1 | 30 |
| **4** | 0,5 | Avec | 5 | 10 |
| ***5*** | *0,35* | *Sans* | *3* | *15* |
| **9** | 0,2 | Sans | 1 | 30 |
| **10** | 0,2 | Sans | 5 | 10 |

Dans tous les cas, la composition contient :

- PU aliphatique
- Eau
- *HALS*
- *Antioxydant*
- Pigment
- *Epaississant*

Les formulations utilisées sont les suivantes :

| **Essai n°3** | | | | |
|---|---|---|---|---|
| | m théorique | m réelle | % théorique | % réel |
| Incorez W830/404/1 | 10,00 | 10,01 | 50,00 | 49,96 |
| Eau | 9,50 | 9,50 | 47,50 | 47,42 |
| Tinuvin 765 | 0,10 | 0,10 | 0,50 | 0,50 |
| Irganox 1076 | 0,20 | 0,21 | 1,00 | 1,05 |
| Midnight Grey | 0,10 | 0,11 | 0,50 | 0,52 |
| Texipol 5028 | 0,10 | 0,11 | 0,50 | 0,55 |
| vitre UV | oui | | | |
| Filmographe | 30 | | | |

| **Essai n°4** | | | | |
|---|---|---|---|---|
| | m théorique | m réelle | % théorique | % réel |
| Incorez W830/404/1 | 10,00 | 10,01 | 50,00 | 49,90 |
| Eau | 8,70 | 8,73 | 43,50 | 43,51 |
| Tinuvin 765 | 0,10 | 0,12 | 0,50 | 0,60 |
| Irganox 1076 | 1,00 | 1,00 | 5,00 | 4,98 |
| Midnight Grey | 0,10 | 0,10 | 0,50 | 0,51 |
| Texipol 5028 | 0,10 | 0,10 | 0,50 | 0,50 |
| vitre UV | oui | | | |
| Filmographe | 10 | | | |

| **Essai n°5** | | | | |
|---|---|---|---|---|
| | m théorique | m réelle | % théorique | % réel |
| Incorez W830/404/1 | 10,00 | 10,02 | 50,00 | 49,95 |
| Eau | 9,13 | 9,14 | 45,65 | 45,56 |
| Tinuvin 765 | 0,10 | 0,12 | 0,50 | 0,60 |
| Irganox 1076 | 0,60 | 0,60 | 3,00 | 2,99 |
| Midnight Grey | 0,07 | 0,07 | 0,35 | 0,36 |
| Texipol 5028 | 0,10 | 0,11 | 0,50 | 0,55 |
| vitre UV | non | | | |
| Filmographe | 15 | | | |

| **Essai n°9** | | | | |
|---|---|---|---|---|
| | m théorique | m réelle | % théorique | % réel |
| Incorez W830/404/1 | 10,00 | 10,02 | 50,00 | 50,03 |
| Eau | 9,56 | 9,56 | 47,80 | 47,73 |
| Tinuvin 765 | 0,10 | 0,11 | 0,50 | 0,55 |

(suite)

| Essai n°9 | | | | |
|---|---|---|---|---|
| | m théorique | m réelle | % théorique | % réel |
| Irganox 1076 | 0,20 | 0,20 | 1,00 | 1,00 |
| Midnight Grey | 0,04 | 0,04 | 0,20 | 0,20 |
| Texipol5028 | 0,10 | 0,10 | 0,50 | 0,50 |
| vitre UV | non | | | |
| Filmographe | 30 | | | |

| Essai n°10 | | | | |
|---|---|---|---|---|
| | m théorique | m réelle | % théorique | % réel |
| Incorez W830/404/1 | 10,00 | 10,04 | 50,00 | 50,02 |
| Eau | 8,76 | 8,76 | 43,80 | 43,65 |
| Tinuvin 765 | 0,10 | 0,10 | 0,50 | 0,50 |
| Irganox 1076 | 1,00 | 1,01 | 5,00 | 5,03 |
| Midnight Grey | 0,04 | 0,04 | 0,20 | 0,20 |
| Texipol 5028 | 0,10 | 0,12 | 0,50 | 0,60 |
| vitre UV | non | | | |
| Filmographe | 10 | | | |

Les résultats obtenus avec le test pour l'essai 3 sont présentés **FIGURE 3** et montrent que le Filtre UV améliore la tenue dans le temps des performances du réseau.

La **FIGURE 4** montre l'évolution de l'intensité lumineuse en fonction du temps et des phases de transition éclaircissement et noircissement dans le cas de l'essai 3. La phase 1 correspond à l'éclaircissement du réseau, la phase 2 à un noircissement et la phase 3 à un éclaircissement. Le Tv initial Ni/Bi est de 21 %.

La **FIGURE 5** montre l'évolution de la transmission visible au cours du temps, obtenue par les différents essais.

## Revendications

1. Réseau, destiné à la constitution d'un écran atténuateur de lumière, constitué d'au moins deux nappes de fils croisés et associées pour former une grille ajourée de facteur d'ouverture déterminé **caractérisé en ce que** les nappes sont enduites avec une composition comprenant un liant polymérique et un pigment organique photochromique de façon à obtenir une régulation de la lumière transmise.

2. Réseau selon la revendication 1 **caractérisé en ce que** le pigment organique photochromique est choisi parmi les spiropyranes, les spirooxazines, les chromènes, les fulgides, les fulgimides, les diaryléthènes, les quinones, les viologens, les perimidinespirocyclohexadieniones et leur dérivés.

3. Réseau selon l'une des revendications précédentes **caractérisé en ce que** le pigment organique photochromique est choisi parmi les piments Photosol®, Variacrol® ou Reversacol®.

4. Réseau selon l'une des revendications précédentes **caractérisé en ce que** le pigment organique photochromique représente de 0,05 à 0,4% (m/m), de préférence de 0,09 % à 0,3% (m/m) de la masse totale du réseau.

5. Réseau selon l'une des revendications précédentes **caractérisé en ce que** le liant polymérique est choisi parmi les polymères thermoplastiques, les polymères thermodurcissables, et leur mélange.

6. Réseau selon l'une des revendications précédentes **caractérisé en ce que** le liant polymérique est choisi parmi les liants vinyliques, acryliques ou polyuréthanes.

7. Réseau selon l'une des revendications précédentes **caractérisé en ce que** le liant polymérique utilisé présentera une certaine souplesse, par exemple **caractérisée par** un allongement à la rupture mesuré selon la norme DIN 53504 supérieur ou égal à 600%.

8. Réseau selon l'une des revendications précédentes **caractérisé en ce que** le liant polymérique représente de 2 à 19 % (m/m), de préférence de 4 à 14% (m/m) de la masse totale du réseau.

9. Réseau selon l'une des revendications précédentes **caractérisé en ce que** la composition comprend un agent stabilisant anti-UV.

10. Réseau selon la revendication 9 **caractérisé en ce que** l'agent stabilisant anti-UV représente de 0,05 à 0,4% (m/m), de préférence de 0,09 à 0,3%(m/m) de la masse totale du réseau.

11. Réseau selon l'une des revendications précédentes **caractérisé en ce que** la composition comprend un agent anti-oxydant.

12. Réseau selon la revendication 11 **caractérisé en ce que** l'agent anti-oxydant représente de 0,1 à 2% (m/m), de préférence de 0,2 à 1% (m/m) de la masse totale du réseau.

13. Réseau selon l'une des revendications précédentes **caractérisé en ce que** les fils des nappes sont associés par tissage.

14. Réseau selon l'une des revendications précédentes, **caractérisé en ce que** le facteur d'ouverture est compris entre 2 et 20 %, est de préférence de l'ordre de 5 % ou 3 %.

15. Réseau selon l'une des revendications précédentes, **caractérisé en ce que** la composition représente de 3 à 20 % (m/m), de préférence de 5 à 15 % (m/m) de la masse totale du réseau.

16. Réseau selon l'une des revendications précédentes, **caractérisé en ce que** les fils sont en verre.

17. Stores ou rideaux constitués d'un réseau selon l'une des revendications précédentes.

18. Procédé de fabrication d'un réseau selon l'une des revendications 1 à 16 **caractérisé en ce qu'**il comprend une étape de traitement des fils des nappes, constituant la grille ajourée de facteur d'ouverture déterminé, avec une composition comprenant un liant polymérique et un pigment organique photochromique.

## Claims

1. A web for constructing a light-attenuating screen, the web being constituted by at least two sheets of yarns that are crossed and associated to form an open grid with a determined openness factor, the web being **characterized in that** the sheets are coated in a composition comprising a polymer binder and a photochromic organic pigment so as to obtain regulation of the light transmitted.

2. A web according to claim 1, **characterized in that** the photochromic organic pigment is selected from spiropyrans, spirooxazines, chromenes, fulgides, fulgimides, diarylethenes, quinones, viologens, perimidinespirocyclohexadieniones, and derivatives thereof.

3. A web according to any preceding claim, **characterized in that** the photochromic organic pigment is selected from Photosol®, Variacrol®, and Reversacol® pigments.

4. A web according to any preceding claim, **characterized in that** the photochromic organic pigment represents 0.05% to 0.4% (by weight) and preferably 0.09% to 0.3% (by weight) of the total weight of the web.

5. A web according to any preceding claim, **characterized in that** the polymer binder is selected from thermoplastic

polymers, thermosetting polymers, and mixtures thereof.

6. A web according to any preceding claim, **characterized in that** the polymer binder is selected from vinyl, acrylic, and polyurethane binders.

7. A web according to any preceding claim, **characterized in that** the polymer binder used presents a certain amount of flexibility, e.g. **characterized by** elongation at break that is greater than or equal to 600% when measured in application of the DIN 53504 standard.

8. A web according to any preceding claim, **characterized in that** the polymer binder represents 2% to 19% (by weight), and preferably 4% to 14% (by weight) of the total weight of the web.

9. A web according to any preceding claim, **characterized in that** the composition includes an anti-UV stabilizing agent.

10. A web according to claim 9, **characterized in that** the anti-UV stabilizing agent represents 0.05% to 0.4% (by weight), and preferably 0.09% to 0.3% (by weight) of the total weight of the web.

11. A web according to any preceding claim, **characterized in that** the composition includes an antioxidant.

12. A web according to claim 11, **characterized in that** the antioxidant represents 0.1% to 2% (by weight), and preferably 0.2% to 1% (by weight) of the total weight of the web.

13. A web according to any preceding claim, **characterized in that** the yarns of the sheets are associated by weaving.

14. A web according to any preceding claim, **characterized in that** the openness factor lies in the range 2% to 20%, and preferably is of the order of 5% or 3%.

15. A web according to any preceding claim, **characterized in that** the composition represents 3% to 20% (by weight), and preferably 5% to 15% (by weight) of the total weight of the web.

16. A web according to any preceding claim, **characterized in that** the yarns are made of glass.

17. Blinds or curtains made from a web according to any preceding claim.

18. A method of fabricating a web according to any one of claims 1 to 16, **characterized in that** it includes a step of treating the yarns of the sheets, constituting the open grid of determined openness factor, with a composition comprising a polymer binder and a photochromic organic pigment.

## Patentansprüche

1. Netz zur Herstellung einer Lichtschattierungsblende, das aus mindestens zwei Schichten gekreuzter und verbundener Fasern besteht, um ein weitmaschiges Gitter mit einem bestimmten Öffnungsfaktor zu bilden, **dadurch gekennzeichnet, daß** die Schichten mit einer Zusammensetzung beschichtet sind, die ein Polymerbindemittel und ein photochromes organisches Pigment umfaßt, um eine Regulierung der Lichtdurchlässigkeit zu erhalten.

2. Netz nach Anspruch 1, **dadurch gekennzeichnet, daß** das photochrome organische Pigment ausgewählt ist aus den Spiropyranen, Spirooxazinen, Chromenen, Fulgiden, Fulgimiden, Diarylethenen, Chinonen, Viologenen, Perimidinspirocyclohexadienionen und deren Derivaten.

3. Netz nach einem der vorhergehenden Ansprüche, **dadurch gekennzeichnet, daß** das photochrome organische Pigment ausgewählt ist aus den Pigmenten Photosol®, Variacrol® oder Reversacol®.

4. Netz nach einem der vorhergehenden Ansprüche, **dadurch gekennzeichnet, daß** das photochrome organische Pigment 0,05 bis 0,4 % (m/m), bevorzugt 0,09 % bis 0,3 % (m/m) der Gesamtmasse des Netzes darstellt.

5. Netz nach einem der vorhergehenden Ansprüche, **dadurch gekennzeichnet, daß** das Polymerbindemittel ausgewählt ist aus den thermoplastischen Polymeren, den wärmehärtbaren Polymeren und deren Gemischen.

6. Netz nach einem der vorhergehenden Ansprüche, **dadurch gekennzeichnet, daß** das Polymerbindemittel ausgewählt ist aus den Vinyl-, Acryl- oder Polyurethanbindamitteln

7. Netz nach einem der vorhergehenden Ansprüche, **dadurch gekennzeichnet, daß** das verwendete Polymerbindemittel eine gewisse Flexibilität aufweist, die zum Beispiel durch eine Bruchdehnung, gemessen nach DIN 53504, von größer oder gleich 600 % **gekennzeichnet** ist.

8. Netz nach einem der vorhergehenden Ansprüche, **dadurch gekennzeichnet, daß** das Polymerbindemittel 2 bis 19 % (m/m), bevorzugt 4 bis 14 % (m/m) der Gesamtmasse des Netzes darstellt.

9. Netz nach einem der vorhergehenden Ansprüche, **dadurch gekennzeichnet, daß** die Zusammensetzung ein UV-Stabilisierungsmittel umfaßt.

10. Netz nach Anspruch 9, **dadurch gekennzeichnet, daß** das UV-Stabilisierungsmittel 0,05 bis 0,4 % (m/m), bevorzugt 0,09 bis 0,3 % (m/m) der Gesamtmasse des Netzes darstellt.

11. Netz nach einem der vorhergehenden Ansprüche, **dadurch gekennzeichnet, daß** die Zusammensetzung ein Antioxidationsmittel umfaßt.

12. Netz nach Anspruch 11, **dadurch gekennzeichnet, daß** das Antioxidationsmittel 0,1 bis 2 % (m/m), bevorzugt 0,2 bis 1 % (m/m) der Gesamtmasse des Netzes darstellt.

13. Netz nach einem der vorhergehenden Ansprüche, **dadurch gekennzeichnet, daß** die Fasern der Schichten durch Weben verbunden werden.

14. Netz nach einem der vorhergehenden Ansprüche, **dadurch gekennzeichnet, daß** der Öffnungsfaktor im Bereich zwischen 2 und 20 %, und bevorzugt in der Größenordnung von 5 % oder 3 % liegt.

15. Netz nach einem der vorhergehenden Ansprüche, **dadurch gekennzeichnet, daß** die Zusammensetzungen 3 bis 20 % (m/m), bevorzugt 5 bis 15 % (m/m) der Gesamtmasse des Netzes darstellt.

16. Netz nach einem der vorhergehenden Ansprüche, **dadurch gekennzeichnet, daß** die Fasern aus Glas sind.

17. Jalousien oder Vorhänge, die aus einem Netz nach einem der vorhergehenden Ansprüche bestehen.

18. Verfahren zur Herstellung eines Netzes nach einem der Ansprüche 1 bis 16, **dadurch gekennzeichnet, daß** es einen Schritt zur Behandlung der Fasern der Schichten umfaßt, aus denen das weitmaschige Gitter mit bestimmtem Öffnungsfaktor besteht, mit einer Zusammensetzung, die ein Polymerbindemittel und ein photochromes organisches Pigment umfaßt.

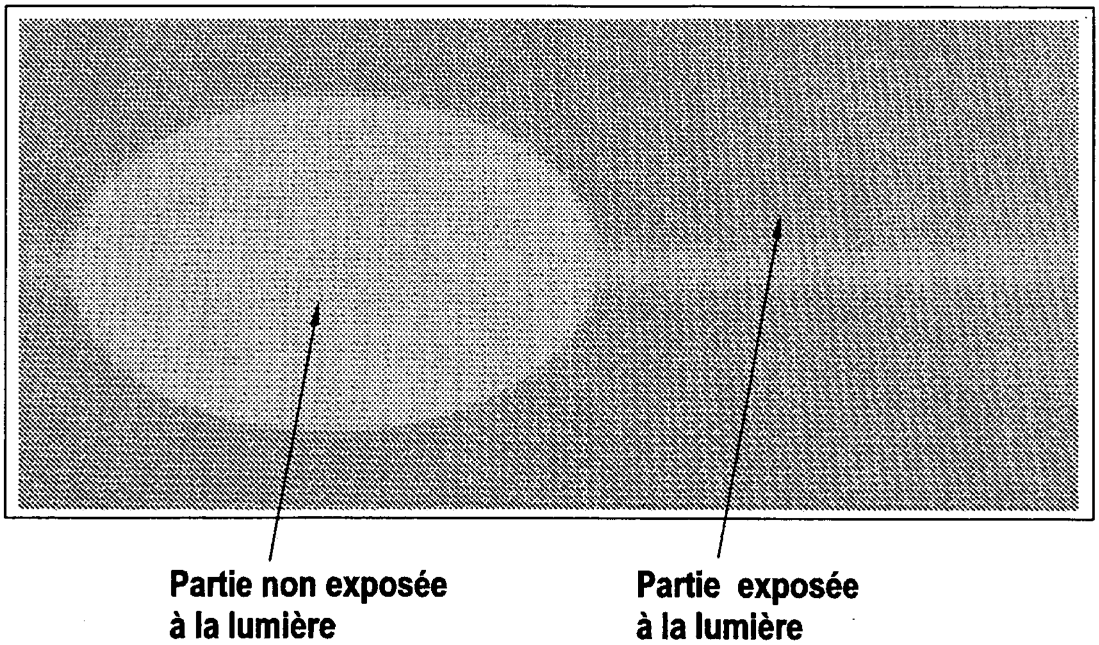


FIG.1

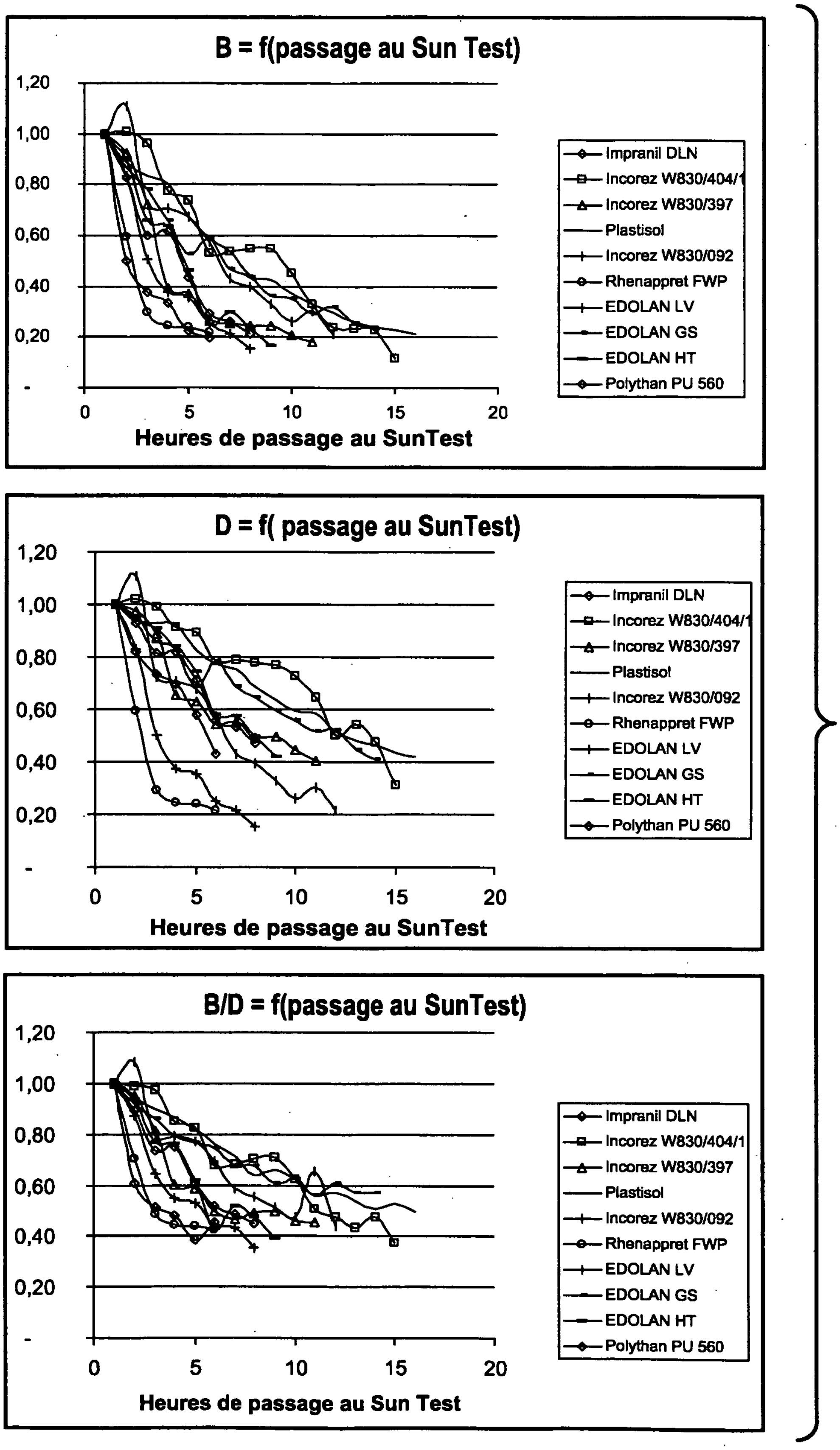
B = f(passage au Sun Test)
1,20
1,00
0,80
0,60
0,40
0,20
-
0
5
10
15
20
Heures de passage au SunTest
Impranil DLN
Incorez W830/404/1
Incorez W830/397
Plastisol
Incorez W830/092
Rhenappret FWP
EDOLAN LV
EDOLAN GS
EDOLAN HT
Polythan PU 560
D = f( passage au SunTest)
1,20
1,00
0,80
0,60
0,40
0,20
-
0
5
10
15
20
Heures de passage au SunTest
Impranil DLN
Incorez W830/404/1
Incorez W830/397
Plastisol
Incorez W830/092
Rhenappret FWP
EDOLAN LV
EDOLAN GS
EDOLAN HT
Polythan PU 560
B/D = f(passage au SunTest)
1,20
1,00
0,80
0,60
0,40
0,20
-
0
5
10
15
20
Heures de passage au Sun Test
Impranil DLN
Incorez W830/404/1
Incorez W830/397
Plastisol
Incorez W830/092
Rhenappret FWP
EDOLAN LV
EDOLAN GS
EDOLAN HT
Polythan PU 560

FIG.2

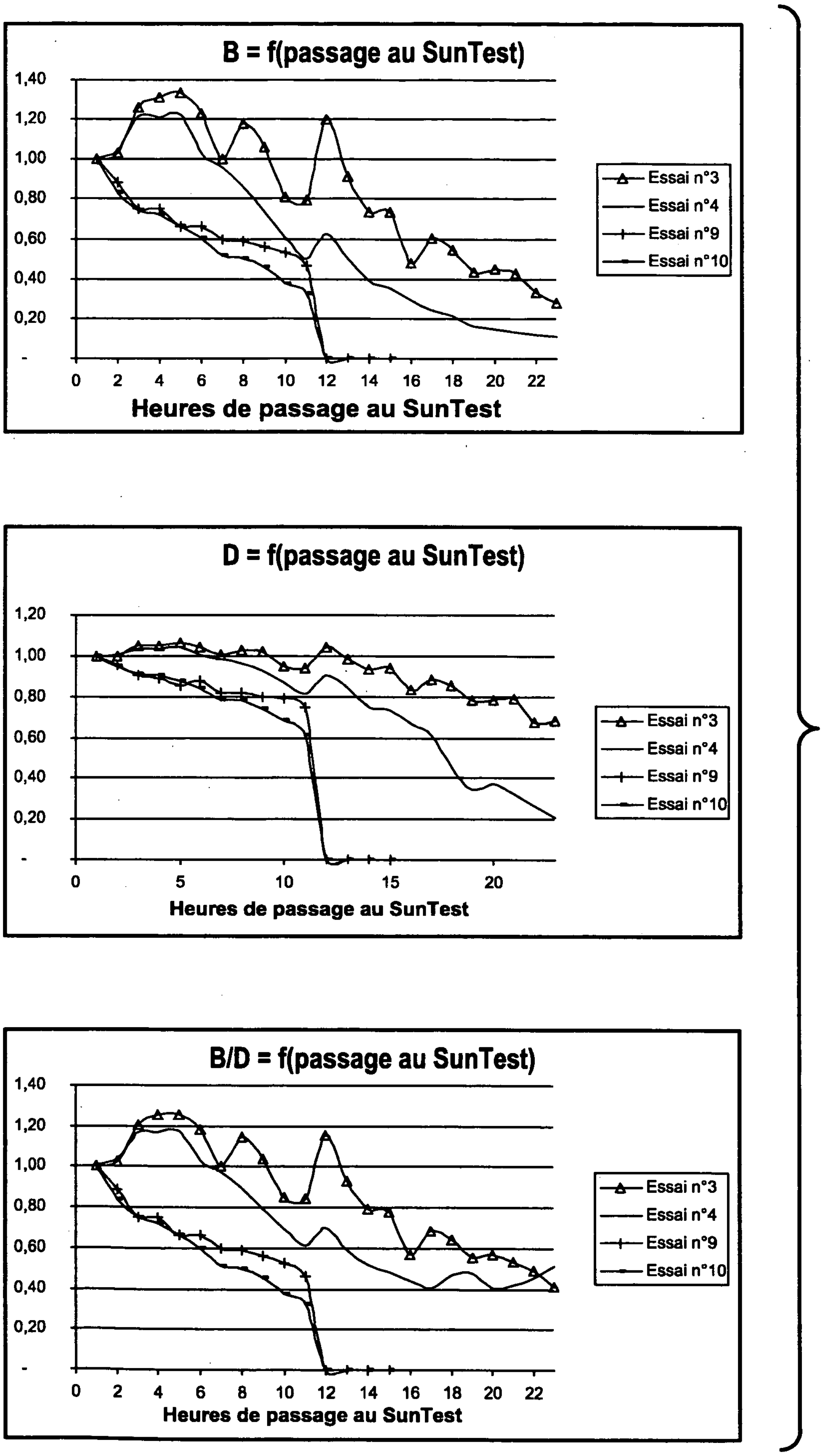
B = f(passage au SunTest)
1,40
1,20
1,00
0,80
0,60
0,40
0,20
-
0 2 4 6 8 10 12 14 16 18 20 22
Heures de passage au SunTest
Essai n°3
Essai n°4
Essai n°9
Essai n°10
D = f(passage au SunTest)
1,20
1,00
0,80
0,60
0,40
0,20
-
0 5 10 15 20
Heures de passage au SunTest
Essai n°3
Essai n°4
Essai n°9
Essai n°10
B/D = f(passage au SunTest)
1,40
1,20
1,00
0,80
0,60
0,40
0,20
-
0 2 4 6 8 10 12 14 16 18 20 22
Heures de passage au SunTest
Essai n°3
Essai n°4
Essai n°9
Essai n°10

FIG.3

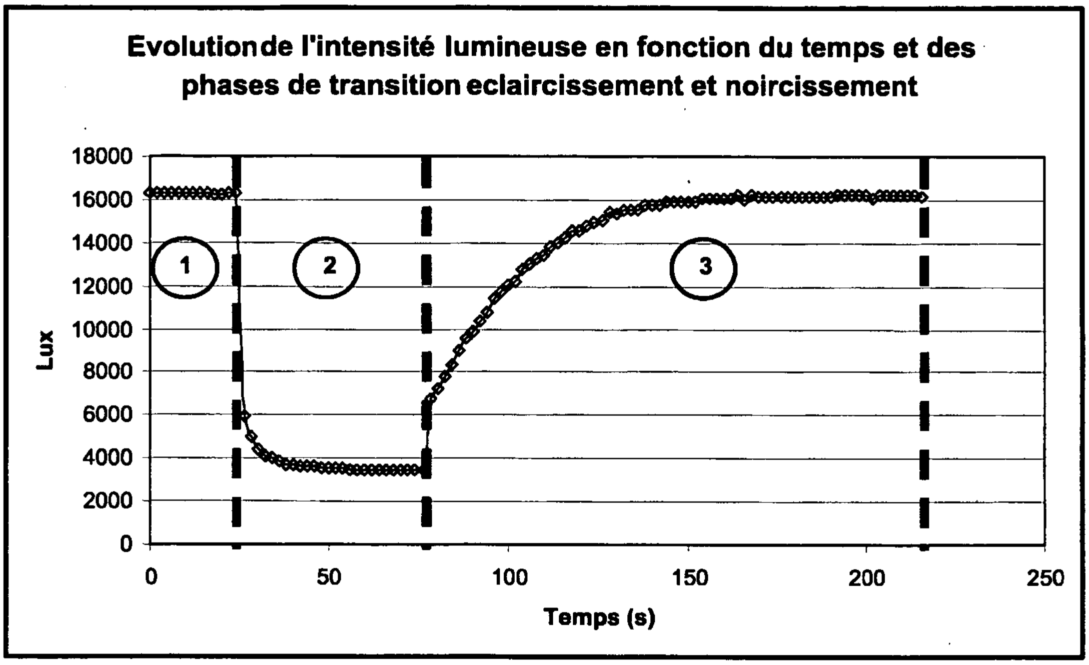
Evolution de l'intensité lumineuse en fonction du temps et des phases de transition eclaircissement et noircissement
18000
16000
14000
12000
10000
8000
6000
4000
2000
0
Lux
1
2
3
0
50
100
150
200
250
Temps (s)

FIG.4

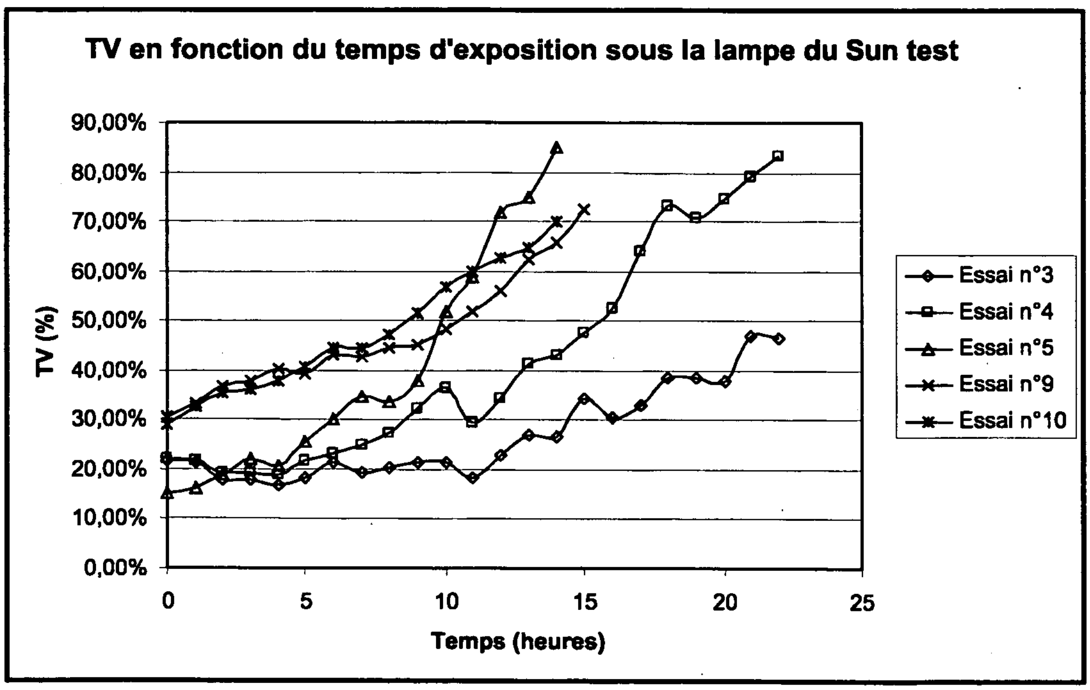
TV en fonction du temps d'exposition sous la lampe du Sun test
90,00%
80,00%
70,00%
60,00%
50,00%
40,00%
30,00%
20,00%
10,00%
0,00%
TV (%)
0
5
10
15
20
25
Temps (heures)
Essai n°3
Essai n°4
Essai n°5
Essai n°9
Essai n°10

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 7059646 A
- WO 9943879 A